(19) Europäisches Patentamt
European Patent Office
Office européen des brevets

(11) **EP 3 881 374 B1**

(12) **EUROPÄISCHE PATENTSCHRIFT**

(45) Veröffentlichungstag und Bekanntmachung des Hinweises auf die Patenterteilung:
**17.04.2024   Patentblatt 2024/16**

(21) Anmeldenummer: **19806112.9**

(22) Anmeldetag: **11.11.2019**

(51) Internationale Patentklassifikation (IPC):
*H01M 4/139* (2010.01)      *H01M 4/02* (2006.01)
*H01M 4/04* (2006.01)       *H01M 4/485* (2010.01)
*H01M 4/58* (2010.01)       *H01M 4/62* (2006.01)
*H01M 10/052* (2010.01)

(52) Gemeinsame Patentklassifikation (CPC):
**H01M 4/0404; H01M 4/139;** H01M 4/485;
H01M 4/5825; H01M 4/623; H01M 4/625;
H01M 10/052; H01M 2220/20; Y02E 60/10

(86) Internationale Anmeldenummer:
**PCT/EP2019/080854**

(87) Internationale Veröffentlichungsnummer:
**WO 2020/099312 (22.05.2020 Gazette 2020/21)**

(54) **VERFAHREN ZUR HERSTELLUNG EINER POSITIVEN ELEKTRODE FÜR EINE BATTERIEZELLE**

METHOD FOR PRODUCING A POSITIVE ELECTRODE FOR A BATTERY CELL

PROCÉDÉ DE FABRICATION D'UNE ÉLECTRODE POSITIVE POUR UN ÉLÉMENT DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2018   DE 102018219472**

(43) Veröffentlichungstag der Anmeldung:
**22.09.2021   Patentblatt 2021/38**

(73) Patentinhaber: **Robert Bosch GmbH**
**70442 Stuttgart (DE)**

(72) Erfinder:
• **CHOI, Joo Young**
  **38122 Braunschweig (DE)**
• **CHOI, Younggeun**
  **70469 Stuttgart (DE)**

(56) Entgegenhaltungen:
**US-A1- 2010 075 219     US-A1- 2015 194 674**

EP 3 881 374 B1

## Beschreibung

Die vorliegende Erfindung bezieht sich auf ein Verfahren gemäß dem Oberbegriff des unabhängigen Anspruchs.

Stand der Technik

Aufgrund ihrer großen Energiedichte und ihrer guten thermischen Stabilität sind Sekundärbatterien, bevorzugt Lithium-Ionen-Batterien, zur Speicherung elektrischer Energie in verschiedenen Anwendungsgebieten, vor allem in elektrisch angetriebenen Fahrzeugen geeignet.

Dabei umfassen Lithium-Ionen-Batterien eine oder mehrere Lithium-Ionen-Batteriezellen. Derartige Lithium-Ionen-Batteriezellen beinhalten üblicherweise eine oder mehrere Elektrodeneinheiten in Form von Elektrodenwickeln oder Elektrodenstapeln, die zumindest eine positive Elektrode, zumindest eine negative Elektrode und zumindest einen ionenleitenden Separator aufweisen, der die positive und die negative Elektrode räumlich voneinander trennt. Die positive bzw. negative Elektrode befindet sich auf einem positiven bzw. negativen Stromsammler. Unter Ausbildung einer Lithium-Ionen-Batteriezelle sind die Elektrodeneinheiten in einem Gehäuse aufgenommen, welches je nach Anwendungsfall prismatisch, rund oder folienartig sein kann.

Die die Lithium-Ionen-Batteriezellen kennzeichnenden Eigenschaften, wie elektrische Leitfähigkeit, Leistungsdichte sowie Energiedichte, sind hauptsächlich
<u>Neue Beschreibungsseite 2 in Reinschrift</u> von Design und Materialeigenschaften sowie dem Herstellungsprozess der positiven Elektrode abhängig.

Diesbezüglich ist ein Verfahren zur Herstellung einer positiven Elektrode aus der US 2017/8468 A1 bekannt, bei dem in einem ersten Verfahrensschritt eine Mischung aus einem Aktivmaterial aufweisend eine Mehrzahl an Aktivmaterialpartikeln und einem Leitadditiv bereitgestellt wird. Dabei weisen die Aktivmaterialpartikel vorzugsweise einen mittleren Durchmesser von 10 bis 50 nm auf.

Ein weiteres Verfahren zur Herstellung einer positiven Elektrode für eine Lithium-Ionen-Batteriezelle ist aus der US 2017/098817 A1 bekannt, bei dem eine Mischung aus einem Aktivmaterial und einem Leitadditiv in einem ersten Verfahrensschritt bereitgestellt wird, wobei das Aktivmaterial vorzugsweise größere Partikel als das Leitadditiv aufweist.

Aus dem Dokument US 2015/194674 A1 ist ein Verfahren zur Herstellung einer Kathode für eine Batteriezelle bekannt, wobei die Kathodenpaste u.a. ein elektroaktives Material umfasst, welches mit Graphen (Leitadditiv) durchmischt ist, wobei das Verhältnis des Domänendurchmessers des elektroaktiven Materials zum Domänendurchmesser des Graphens zwischen 3:2 und 15:1 liegt und der Feststoffanteil in der Kathodenpaste 80% beträgt.

Offenbarung der Erfindung

Erfindungsgemäß wird ein Verfahren zur Herstellung einer positiven Elektrode für eine Batteriezelle bereitgestellt, wobei die positive Elektrode ein Aktivmaterial und ein Leitadditiv umfasst.

Dabei beinhaltet das Aktivmaterial eine erste Anzahl an Aktivmaterialpartikeln, insbesondere an kugelförmigen Aktivmaterialpartikeln, die einen ersten mittleren Durchmesser aufweisen. Zugleich ist eine zweite Anzahl an Leitadditivpartikeln,

insbesondere an kugelförmigen Leitadditivpartikeln, vorgesehen. Dabei weisen die Leitadditivpartikel einen zweiten mittleren Durchmesser auf. Als Aktivmaterial werden Materialanteile einer Elektrode bezeichnet, an denen im Betrieb der Batteriezelle die entsprechenden elektrochemischen Vorgänge ablaufen, wie beispielsweise, die Interkalation oder Deinterkalation von Lithiumionen.

Das Leitadditiv dient dazu, die elektrische Leitfähigkeit in der positiven Elektrode zu erhöhen und einzelne Aktivmaterialpartikel miteinander elektrisch zu verbinden.

In einem ersten Verfahrensschritt werden das Aktivmaterial und das Leitadditiv bereitgestellt, wobei die Anzahl der Leitadditivpartikel abhängig von einem Verhältnis des zweiten mittleren Durchmessers zu dem ersten mittleren Durchmesser und von der Anzahl der Aktivmaterialpartikel eingestellt wird.

Dabei ist es vorteilhaft, dass eine Oberfläche der Aktivmaterialpartikel flächendeckend mit Leitadditivmaterialpartikeln beschichtet wird. Durch die vorbeschriebene Festlegung der Anzahl der Leitadditivpartikel wird die Oberfläche der Aktivmaterialpartikel durch die bereitgestellten Leitadditivpartikel weitgehend vollständig bedeckt. Dadurch wird der elektrische Gesamtwiderstand der Batteriezelle umfassend einen ohmschen Widerstand, einen Ladungsübertragungswiderstand und einen Diffusionswiderstand im Vergleich zu üblichen Batteriezellen deutlich reduziert.

Weitere vorteilhafte Ausführungsformen der vorliegenden Erfindung sind Gegenstand der Unteransprüche.

So ist es von Vorteil, wenn in einem zweiten Verfahrensschritt Leitadditivpartikel in einem Binder dispergiert werden.

Weiterhin ist es von Vorteil, wenn in dem zweiten Verfahrensschritt eine Einwaage des Binders gleich der Einwaage der in dem ersten Verfahrensschritt bereitgestellten Leitadditivpartikel eingestellt wird.

Weiterhin ist es von Vorteil, wenn in einem dritten Verfahrensschritt die Dispersion aus dem Binder und den Leitadditivpartikeln mit den Aktivmaterialpartikeln, die in dem ersten Verfahrensschritt bereitgestellt sind, gemischt wird.

Um einen Diffusionswiderstand zu reduzieren, der durch Bewegung der Lithiumionen zwischen einer positiven und negativen Elektrode in einer Batteriezelle, vorzugsweise in einer Lithium-Ionen-Batteriezelle, verursacht wird, wird in einem vierten Verfahrensschritt eine weitere Menge an Binder mit einer weiteren Menge an Leitadditivpartikeln gemischt. Die gesamte Menge an Leitadditivpartikeln in der positiven Elektrode beträgt vorzugsweise 4% bis 10% bezogen auf die gesamte Menge an Aktivmaterialpartikeln. Dabei setzt sich die gesamte Menge an Leitadditivpartikeln aus einer Menge gemäß dem ersten Verfahrensschritt und einer weiteren Menge gemäß dem dritten Verfahrensschritt zusammen.

In einem fünften Verfahrensschritt wird die Mischung umfassend Binder und Leitadditivpartikel aus dem vierten Verfahrensschritt mit der Mischung aus dem dritten Verfahrensschritt gemischt.

Hierbei ist es von Vorteil, wenn um alle Feststoffe, insbesondere den Binder, suspendieren zu können, in einem sechsten Verfahrensschritt ein Lösungsmittel zu der Mischung gemäß dem fünften Verfahrensschritt hinzugegeben wird. Dabei kann das Lösungsmittel N-Methyl-2-pyrrolidon (NMP) sein.

Unter Ausbildung einer positiven Elektrodenschicht wird in einem siebten Verfahrensschritt die Suspension gemäß dem sechsten Verfahrensschritt auf einer Trägerfolie aufgebracht. Die Trägerfolie weist vorzugsweise eine Aluminiumfolie auf, die auch als ein positiver Stromsammler funktioniert. Nach dem Aufbringen der Suspension auf der Trägerfolie wird das Lösungsmittel abschließend beispielsweise in einem Autoklav abgedampft.

Das erfindungsgemäße Verfahren lässt sich vorteilhaft für positive Elektroden in Lithium-Ionen-Batteriezellen einsetzen, die Anwendung in elektrischen Fahrzeugen, in Hybridfahrzeugen, oder in stationären Anwendungen wie beispielsweise zur Speicherung regenerativ gewonnener Energie finden.

Kurze Beschreibung der Figuren

In der Zeichnung sind vorteilhafte Ausführungsformen der vorliegenden Erfindung dargestellt und in der nachfolgenden Figurenbeschreibung näher erläutert. Es zeigt:

Figur 1:    eine schematische Darstellung eines erfindungsgemäßen Verfahrens zur Herstellung einer positiven Elektrode für eine Batteriezelle,

Figur 2:    eine schematische Schnittansicht einer erfindungsgemäßen positiven Elektrode für eine Batteriezelle.

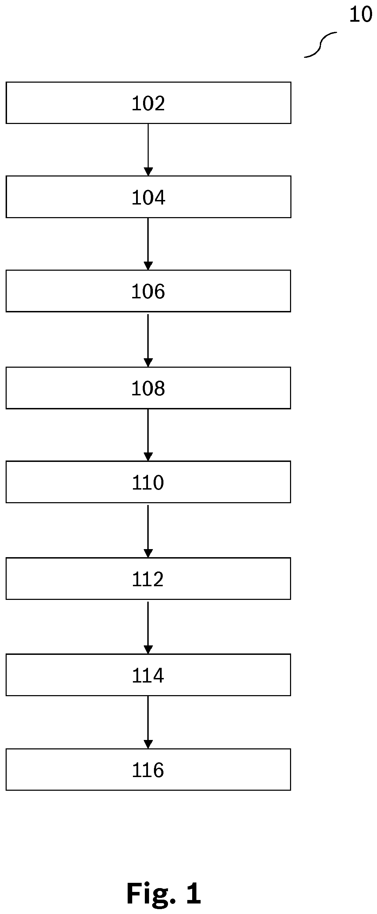

In Figur 1 ist ein erfindungsgemäßes Verfahren 10 zur Herstellung einer positiven Elektrode für eine Batteriezelle, vorzugsweise eine Lithium-Ionen-Batteriezelle, schematisch dargestellt. Das Verfahren 10 kann beispielsweise in der dargestellten Reihenfolge erfolgen.

In einem ersten Verfahrensschritt 102 werden ein Aktivmaterial und ein Leitadditiv bereitgestellt. Vorzugsweise kann das Aktivmaterial ein Lithium-MetallOxid, ein Lithium-Eisen-Phosphat oder ein Lithium-Titanat-Oxid sein und das Leitadditiv Ruß umfassen.

Dabei weist das Aktivmaterial eine erste Anzahl $n_1$ an Aktivmaterialpartikeln auf, insbesondere an kugelförmigen Aktivmaterialpartikeln. Darüber hinaus weist das Leitadditiv eine zweite Anzahl $n_2$ an Leitadditivpartikeln auf, insbesondere an kugelförmigen Leitadditivpartikeln. Dabei liegt ein erster mittlerer Durchmesser $\overline{D}_1$ der insbesondere kugelförmigen Aktivmaterialpartikel und ein zweiter mittlerer Durchmesser $\overline{D}_2$ der insbesondere kugelförmigen Leitadditivpartikel vor. In dem ersten Verfahrensschritt wird die zu verwendende Anzahl der Leitadditivpartikel abhängig von einem Verhältnis des zweiten mittleren Durchmessers $\overline{D}_2$ der Leitadditivpartikel zu dem ersten mittleren Durchmesser $\overline{D}_1$ der Aktivmaterialpartikel und der Anzahl der bereitgestellten Aktivmaterialpartikel eingestellt. Die Einstellung kann mit der folgenden Formel mathematisch beschrieben werden:

$$n_2 = N * \frac{\overline{D}_2}{\overline{D}_1} * n_1,$$

wobei $N$ für eine Zahl in einem Bereich von 1,6 und 1,7 steht. Vorzugsweise beträgt $N$ gleich 1,64.

In einem zweiten Verfahrensschritt 104 werden die Leitadditivpartikel gemäß dem ersten Verfahrensschritt in einem Binder dispergiert. Der Binder kann beispielsweise ein Polymer umfassen, vorzugsweise Polyvinylidenfluorid (PVDF). Dabei wird eine Einwaage des Binders derart eingestellt, dass die Einwaage des Binders gleich einer Einwaage der Leitadditivpartikel ist.

Danach wird die Dispersion in einem dritten Verfahrensschritt 106 mit den Aktivmaterialpartikeln, die gemäß dem ersten Verfahrensschritt 102 bereitgestellt sind, gemischt.

Darauf wird in einem vierten Verfahrensschritt 108 eine weitere Menge an Binder mit einer weiteren Menge an Leitadditivpartikeln gemischt.

Anschließend wird in einem fünften Verfahrensschritt 110 die Mischung aus der weiteren Menge an Binder und der weiteren Menge an Leitadditivpartikeln mit der Mischung gemäß dem dritten Verfahrensschritt 106 zusammengeführt.

Danach wird in einem sechsten Verfahrensschritt 112 die Mischung gemäß dem fünften Verfahrensschritt 110 in einem Lösungsmittel, vorzugsweise N-Methyl-2-pyrrolidon (NMP), suspendiert. Diese Suspension wird in einem siebten Verfahrensschritt 114 auf einer Trägerfolie aufgebracht. Diese Trägerfolie kann eine Aluminiumfolie sein, welche zugleich als ein positiver Stromsammler für die positive Elektrode funktioniert.

Abschließend wird in einem achten Verfahrensschritt 116 das Lösungsmittel der Suspension abgedampft. Dieser Prozess kann vorzugsweise in einem Autoklav bei einer Temperatur von 140 °C bis 160 °C durchgeführt werden.

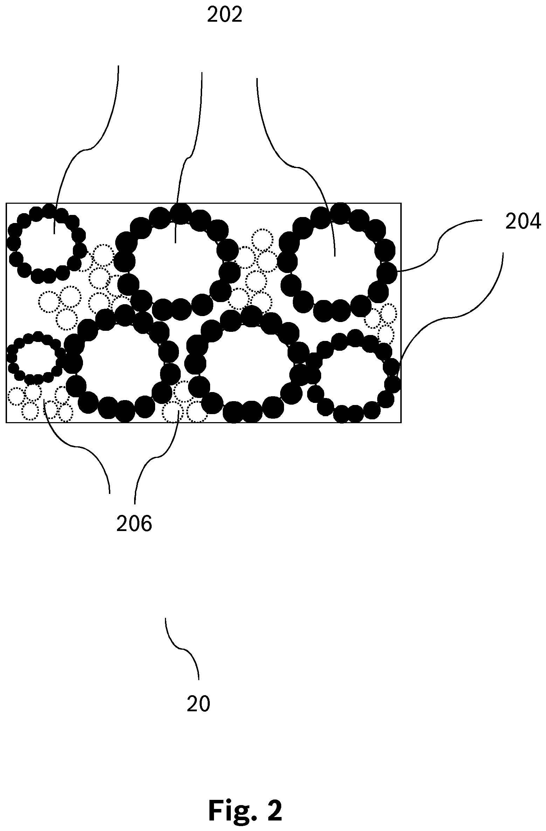

In Figur 2 ist eine Schnittansicht einer positiven Elektrode 20, die gemäß dem vorbeschriebenen Verfahren 10 hergestellt ist, in Form einer positiven Elektrodenschicht schematisch dargestellt. Die positive Elektrode 20 umfasst zumindest eine Anzahl an insbesondere kugelförmigen Aktivmaterialpartikeln 202 und eine Mischung 204 aus insbesondere kugelförmigen Leitadditivmaterialpartikeln und einer Einwaage an Binder. Dabei sind die Oberflächen der insbesondere kugelförmigen Aktivmaterialpartikel 202 mit der Mischung 204 bedeckt. Ferner ist eine weitere Mischung 206 aus einer weiteren Menge an insbesondere kugelförmigen Leitadditivmaterialpartikeln und einer weiteren Menge an Binder in den Zwischenräumen zwischen den insbesondere kugelförmigen Aktivmaterialpartikeln 202 bedeckt mit der Mischung 204 vorgesehen. Die insbesondere kugelförmigen Aktivmaterialpartikel 202 können unterschiedlich groß sein.

Derartige positiven Elektroden 20 lassen sich vorteilhaft für Batteriezellen einsetzen, die in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz kommen.

## Patentansprüche

1. Verfahren zur Herstellung einer positiven Elektrode für eine Batteriezelle, mit einem Aktivmaterial und einem Leitadditiv,

   wobei das Aktivmaterial eine erste Anzahl an insbesondere kugelförmigen Aktivmaterialpartikeln mit einem ersten mittleren Durchmesser aufweist und wobei
   das Leitadditiv eine zweite Anzahl an insbesondere kugelförmigen Leitadditivpartikeln mit einem zweiten mittleren Durchmesser aufweist,
   **dadurch gekennzeichnet, dass**
   in einem ersten Verfahrensschritt (102) das Aktivmaterial und das Leitadditiv bereitgestellt werden, wobei die Anzahl der Leitadditivpartikel abhängig von einem Verhältnis des zweiten mittleren Durchmessers zu dem ersten mittleren Durchmesser und von der Anzahl der Aktivmaterialpartikel eingestellt wird.

2. Verfahren nach dem vorherigen Anspruch 1,

   wobei die positive Elektrode weiterhin einen Binder umfasst,
   **dadurch gekennzeichnet, dass**
   in einem zweiten Verfahrensschritt (104) Leitadditivpartikel in dem Binder dispergiert werden.

3. Verfahren nach dem vorherigen Anspruch 2,

   **dadurch gekennzeichnet, dass**
   in dem zweiten Verfahrensschritt (104) eine Einwaage des Binders derart eingestellt wird, sodass
   die Einwaage des Binders gleich einer Einwaage der Leitadditivpartikel ist.

4. Verfahren nach dem vorherigen Anspruch 3,
   **dadurch gekennzeichnet, dass**
   in einem dritten Verfahrensschritt (106) die Dispersion aus dem zweiten Verfahrensschritt (104) mit den in dem ersten Verfahrensschritt (102) bereitgestellten Aktivmaterialpartikeln gemischt wird.

5. Verfahren nach dem vorherigen Anspruch 4,
   **dadurch gekennzeichnet, dass**
   in einem vierten Verfahrensschritt (108) eine weitere Menge an Binder mit einer weiteren Menge an Leitadditivpartikeln gemischt wird.

6. Verfahren nach dem vorherigen Anspruch 5,
   **dadurch gekennzeichnet, dass**
   in einem fünften Verfahrensschritt (110) die Mischung aus dem vierten Verfahrensschritt (108) mit der Mischung aus dem dritten Verfahrensschritt (106) gemischt wird.

7. Verfahren nach dem vorherigen Anspruch 6,
   **dadurch gekennzeichnet, dass**
   in einem sechsten Verfahrensschritt (112) die Mischung aus dem fünften Verfahrensschritt (110) in einem Lösungsmittel, insbesondere N-Methyl-2-pyrrolidon (NMP), suspendiert wird.

8. Verfahren nach dem vorherigen Anspruch 7,
   **dadurch gekennzeichnet, dass**
   in einem siebten Verfahrensschritt (114) die Suspension auf einer Trägerfolie, insbesondere einer Trägerfolie aus Aluminium, aufgebracht wird.

9. Verfahren nach dem vorherigen Anspruch 8,
   **dadurch gekennzeichnet, dass**
   abschließend in einem achten Verfahrensschritt (116) das Lösungsmittel von der Suspension abgedampft wird.

## Claims

1. Method for producing a positive electrode for a battery cell, having an active material and a conductive additive,

wherein the active material has a first number of, in particular, spherical active material particles with a first mean diameter,
and wherein
the conductive additive has a second number of, in particular, spherical conductive additive particles with a second mean diameter,
**characterized in that**
the active material and the conductive additive are provided in a first method step (102), the number of conductive additive particles being adjusted according to a ratio of the second mean diameter to the first mean diameter and the number of active material particles.

2. Method according to the preceding Claim 1,

wherein the positive electrode furthermore comprises a binder,
**characterized in that**
conductive additive particles are dispersed in the binder in a second method step (104).

3. Method according to the preceding Claim 2,
**characterized in that**

an initial weight of the binder is adjusted in the second method step (104) so that
the initial weight of the binder is equal to an initial weight of the conductive additive particles.

4. Method according to the preceding Claim 3,
**characterized in that**
the dispersion from the second method step (104) is mixed in a third method step (106) with the active material particles provided in the first method step (102).

5. Method according to the preceding Claim 4,
**characterized in that**
a further quantity of binder is mixed with a further quantity of conductive additive particles in a fourth method step (108).

6. Method according to the preceding Claim 5,
**characterized in that**
the mixture from the fourth method step (108) is mixed in a fifth method step (110) with the mixture from the third method step (106).

7. Method according to the preceding Claim 6,
**characterized in that**
the mixture from the fifth method step (110) is suspended in a solvent, in particular N-methyl-2-pyrrolidone (NMP), in a sixth method step (112).

8. Method according to the preceding Claim 7,
**characterized in that**

the suspension is applied on a carrier foil, in particular a carrier foil made of aluminium, in a seventh method step (114).

9. Method according to the preceding Claim 8,
**characterized in that**
the solvent is finally evaporated from the suspension in an eighth method step (116).

**Revendications**

1. Procédé de fabrication d'une électrode positive pour un élément de batterie,

comprenant un matériau actif et un additif conducteur,
dans lequel le matériau actif présente un premier nombre de particules de matériau actif, en particulier sphériques, ayant un premier diamètre moyen, et
dans lequel l'additif conducteur présente un deuxième nombre de particules d'additif conducteur, en particulier sphériques, ayant un deuxième diamètre moyen,
**caractérisé en ce que** dans une première étape de procédé (102), le matériau actif et l'additif conducteur sont fournis, dans lequel le nombre des particules d'additif conducteur est réglé en fonction d'un rapport entre le deuxième diamètre moyen et le premier diamètre moyen et du nombre des particules de matériau actif.

2. Procédé selon la revendication précédente 1, dans lequel l'électrode positive comprend en outre un liant, **caractérisé en ce que** dans une deuxième étape de procédé (104), des particules d'additif conducteur sont dispersées dans le liant.

3. Procédé selon la revendication précédente 2, **caractérisé en ce que** dans une deuxième étape de procédé (104), une quantité pesée du liant est réglée de telle sorte que la quantité pesée du liant est égale à une quantité pesée des particules d'additif conducteur.

4. Procédé selon la revendication précédente 3, **caractérisé en ce que** dans une troisième étape de procédé (106), la dispersion issue de la deuxième étape de procédé (104) est mélangée avec les particules de matériau actif fournies dans la première étape de procédé (102).

5. Procédé selon la revendication précédente 4, **caractérisé en ce que** dans une quatrième étape de procédé (108), une quantité de liant supplémentaire est mélangée avec une quantité de particules d'additif conducteur supplémentaire.

6. Procédé selon la revendication précédente 5, **caractérisé en ce que** dans une cinquième étape de procédé (110), le mélange issu de la quatrième étape de procédé (108) est mélangé avec le mélange issu de la troisième étape de procédé (106).

7. Procédé selon la revendication précédente 6, **caractérisé en ce que** dans une sixième étape de procédé (112), le mélange issu de la cinquième étape de procédé (110) est mis en suspension dans un solvant, en particulier dans de la N-méthyl-2-pyrrolidone (NMP).

8. Procédé selon la revendication précédente 7, **caractérisé en ce que** dans une septième étape de procédé (114), la suspension est appliquée à une feuille support, en particulier une feuille support en aluminium.

9. Procédé selon la revendication précédente 8, **caractérisé en ce que** pour finir, dans une huitième étape de procédé (116), le solvant est évaporé de la suspension.

10

```
┌─────────────────────────┐
│           102           │
└─────────────────────────┘
             │
             ▼
┌─────────────────────────┐
│           104           │
└─────────────────────────┘
             │
             ▼
┌─────────────────────────┐
│           106           │
└─────────────────────────┘
             │
             ▼
┌─────────────────────────┐
│           108           │
└─────────────────────────┘
             │
             ▼
┌─────────────────────────┐
│           110           │
└─────────────────────────┘
             │
             ▼
┌─────────────────────────┐
│           112           │
└─────────────────────────┘
             │
             ▼
┌─────────────────────────┐
│           114           │
└─────────────────────────┘
             │
             ▼
┌─────────────────────────┐
│           116           │
└─────────────────────────┘
```

**Fig. 1**

202

204

206

20

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20178468 A1
- US 2017098817 A1
- US 2015194674 A1